# EUROPEAN PATENT APPLICATION

(11) **EP 3 945 470 A1**
(43) Date of publication of application: **02.02.2022**
(21) Application number: 20189010.0
(22) Date of filing: 31.07.2020
(51) Int. Cl.: G06N 3/04, G06N 3/063, G06N 3/08

(54) **METHODS AND SYSTEMS FOR REDUCING THE COMPLEXITY OF A COMPUTATIONAL NETWORK**

(71) Applicant: Aptiv Technologies Limited, St. Michael (BB)
(72) Inventor: Prediger, Christian, 51789 Lindlar (DE); Aguilar, Miguel Angel, 40235 Düsseldorf (DE)
(74) Representative: Manitz Finsterwald Patent- und Rechtsanwaltspartnerschaft mbB

(57) **Abstract**

A computer implemented method for reducing the complexity of a computational network comprises the following steps carried out by computer hardware components: determining computational complexity of at least one portion of the computational network; determining an effect of a reduction of a complexity of the computational network on an output of the computational network; and determining how to reduce the complexity of the computational network based on the determined computational complexity and based on the effect.

## Description

### FIELD

The present disclosure relates to methods and systems for reducing a complexity of a computational network.

### BACKGROUND

Machine learning methods are widely used. However, the resulting methods may be computationally expensive.

Accordingly, there is a need to reduce complexity of machine learning methods.

### SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for reducing a complexity of a computational network (for example for reducing a complexity of an (artificial) neural network), the method comprising the following steps performed (in other words: carried out) by computer hardware components: determining computational complexity of at least one portion of the computational network; determining an effect of a reduction of a complexity of the computational network on an output of the computational network; and determining how to reduce the complexity of the computational network based on the determined computational complexity and based on the effect.

For example, a target-aware pruning method for machine learning algorithms may be provided. For example, target-aware pruning methods for resource constrained embedded systems, where target-specific profiling information and pruning metrics may be combined to achieve a superior inference execution performance while meeting strict KPI requirements, for example recall, precision, F.score and other measures used for classification and detection methods.

According to another aspect, determining the effect of a reduction of a complexity of the computation network comprises determining a channel importance metrics.

The importance metrics in a computational network may be numerical values that allow to quantify the relevance of components, e.g., channels in neural networks, for the functional correctness and accuracy of the network. Depending on the importance metric type, either the highest or the lowest metric values define which are most important components.

According to another aspect, a type of channel importance metrics may be defined by user input.

As such, the method may not be restricted to one particular channel importance metric. Instead, the method may be applied with new or existing metrics, which may enable the method to identify the less important channels that should be pruned. This flexibility allows selecting among supported metrics the most appropriate to analyze and prune a particular model.

According to another aspect, determining the computational complexity comprises determining on-target profiling information. The profiling information may be determined by executing the computational network on the target hardware and measure characteristics of software components of the network on the utilized hardware. According to another aspect, the on-target profiling information comprises information on computational complexity on the system where the computational network is to be executed.

The method combines (a) channel importance metrics and (b) on-target profiling information. It has been found that combining channel importance and profiling metrics provides a good computational inference performance, while keeping KPIs that match the ones of the original model.

According to another aspect, the system comprises at least one of a graphics processing unit, a central processing unit, a digital signal processor or an artificial intelligence accelerator.

This enables the method to be widely applicable to multiple types of devices for ML (machine learning) model deployment.

According to another aspect, determining how to reduce the complexity of the computational network based on the determined computational complexity and based on the effect comprises determining layers of the computational network to be subjected to pruning.

Thus, the method according to various embodiments may have on-target profiling capabilities that allow determining the relevant layers types for pruning without the need to execute and profile all layers in the model. The relevant layer types which need to be profiled may be determined by the user, which are typically the most computationally intensive layers by nature.

According to another aspect, the computer implemented method further comprises the following step carried out by the computer hardware components: determining a computational network of reduced complexity based on the determination how to reduce the complexity. According to another aspect, determining the computational network of reduced complexity comprises pruning the computational network. The importance metrics together with the on-target device information may allow the identification of the less important but also computationally intensive channels to be removed and may thus reduce the network complexity. Once the list of channels to be removed is identified, the channels are either automatically removed from the computational network or this information is used by the user to refine the architecture of the network with less channels in particular layers.

According to another aspect, the computational network comprises a plurality of layers. For example, the computational network may be an (artificial) neural network.

According to another aspect, the layers comprise at least one of convolution layers, dense layers or user-defined custom layers. The method may be able to prune various types of layers (e.g., even user-defined custom layers) and models beyond only convolutional layers and Convolutional Neural Networks (CNN). Therefore, a plurality of optimization opportunities may be exploited.

According to another aspect, the computer implemented method further comprises the following step carried out by the computer hardware components: providing a graphical user interface for illustration of a computational network provided as input and a computational network for which the complexity has been reduced.

It has been found that by considering graph visualization facilities that allow developers to easily understand the pruning and profiling results, i.e., where and how many channels were pruned and which are the hotspot layers of the model on the target model, the user experience may be enhanced.

In another aspect, the present disclosure is directed at a (first) computer system, said computer system comprising a plurality of computer hardware components configured to carry out several or all steps of the computer implemented method described herein.

In another aspect, the present disclosure is directed at a (second) computer system (which may for example be included in a vehicle, for example a car, for example an at least partially autonomously driving car), for example an embedded computer system, the computer system comprising a plurality of computer hardware components configured to evaluate a computational network of reduced complexity, determined based on the computer implemented method described herein.

The computer system (for example the first computer system, or for example the second computer system) may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1: an illustration of a method to reduce complexity of a computational network according to various embodiments; and
- Fig. 2: a flow diagram illustrating a method for reducing a complexity of a computational network according to various embodiments.

### DETAILED DESCRIPTION

Machine Learning (ML) methods (or ML algorithms) may be used to solve challenging perception tasks, for example in embedded systems. These tasks may be performed for example by Deep Neural Networks (DNNs). ML technology may be superior in many fields but also may lead to high computational requirements. Since the vast majority of the existing technologies have been developed aiming server and web applications, embedded systems requirements are not always the initial target. Strategies for embedded deployment of DNNs are optimization techniques and special purpose hardware. Many of these technologies could negatively impact the accuracy of the models and therefore they have to be carefully applied.

According to various embodiments, an optimization technique may be provided which may be referred to as pruning, in which neural networks are optimized by reducing their size and other properties. The final goal is to reduce the algorithmic intensity in embedded targets (i.e., the inference time, in other words: the time required for evaluation of the neural network after training in order to obtain the result computed by the neural network) under the precondition that the deployed models still meet the Key Performance Indicators (KPIs) requirements.

Pruning may offer potential for optimization, and according to various embodiments, dependency on hardware may be taken into account for the iterative adjustment of the optimizer.

According to various embodiments, hardware characteristics may be taken into account for pruning, and the accuracy may be considered as a target for pruning. The target hardware of various embodiments may include, but are not limited to, GPUs (graphics processing units), CPUs (central processing units), DSPs (digital signal processors) or AI (artificial intelligence) accelerators.

Pruning may reduce the size (i.e., memory requirements) of neural network models for efficient inference on resource constrained systems. According to various embodiments, target-aware pruning may be provided by combining (a) channel importance metrics and (b) on-target profiling information. In this way, various embodiments allow to tailor pruning techniques to a specific target system to achieve a superior inference performance while matching the accuracy of the original input model.

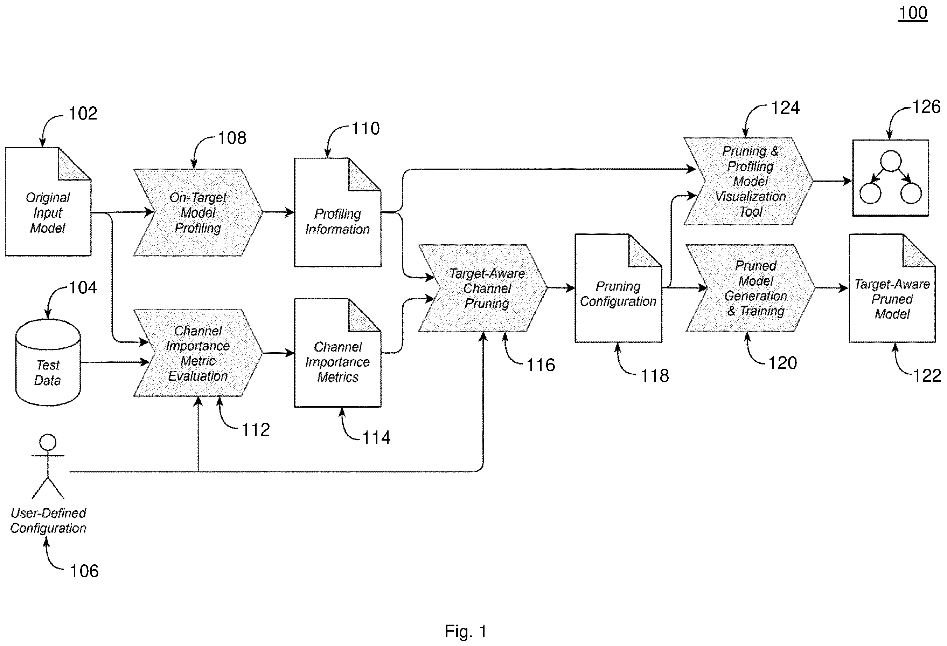

Fig. 1 shows an illustration 100 of a method to reduce complexity of a computational network (in other words: an illustration of a target-aware pruning method) according to various embodiments. The original model 102 (in other words: the original computational network or a description thereof), for example described in common deep learning frameworks (e.g., Keras/Tensorflow) may be provided as an input. Furthermore, test data 104 may be provided as an input to evaluate the importance of the channels according a given importance metric. Furthermore, a user-defined configuration 106 may be provided as an input. The channel importance metrics may allow quantifying relevance of channels for the overall accuracy of the model. The user-defined configuration 106 may include information on the following aspects:
- a selected importance metric to be evaluated;
- an amount of pruning as a percentage of the total number of channels or as an absolute number of channels; and
- a performance threshold that defines the computationally intensive layers considered for pruning

According to various embodiments, analysis using on-target model profiling 108 may be carried out, which takes as input the model and extracts timing information for the prunable layers types, i.e., layers that contain weights including but not limited to convolutional, dense, RNN (recurrent neural network) layers (e.g., LSTM - Long Short-Term Memory), user-defined layers among others. As a result of the on-target model profiling, an output report file (profiling information 110) is generated that summarizes the layer name and the average inference time. In addition, the on-target profiling allows evaluating the performance of the prunable layers for different amount of channels. This may be desirable because the inference time of a layer as a function of the number of channel exhibits different types of patterns depending on the target hardware.

A further analysis may be channel importance metric evaluation 112. The goal of the channel importance metrics may be to identify the channels that can be removed with none or minimal impact on the accuracy of the model. According to various embodiments, various different importance metrics may be provided. Using the user-defined configuration 106, the desired importance metric to be evaluated may be selected. As result of the importance metric evaluation 112, a file (channel importance metrics 114) may be generated, which may contain the list of all prunable channels with the name of its corresponding layers and metric values.

According to various embodiments, using the profiling information 110 and the channel important metric files 114, target-aware channel pruning 116 may take the final decision about the channels to be pruned. The final pruning configuration 118 may be saved in an output file, which may in turn be used to provide generation and training 120 of a pruned version 122 of the input model. During model generation 120, the pruning configuration 118 may be used to define the number of channels per layer in the pruned model 122. In addition, during the model generation step 120, multiple existing weight initialization strategies (e.g., random weights or weights of the original model) may be considered to improve the achieved accuracy prior to training of the pruned model 122.

The method according to various embodiments is not restricted to a particular type of models or layers, but may be applied to any kind of models or layers, for example convolutional neural networks, recurrent neural networks, (common) convolution layers, dense layers, and user-defined custom layers.

According to various embodiments, a visualization tool 124 may be provided to allow the developers to easily understand where the hotspot layers are located and how the layers were pruned with respect to the original model 102 by means of a graphical representation 126 of the model (for example of both the original input model 102 and the target-aware pruned model 122).

With various embodiments, a technique is provided for pruning machine learning algorithms for use in embedded (for example vehicle) computing systems to drive efficiency while delivering vehicle functions.

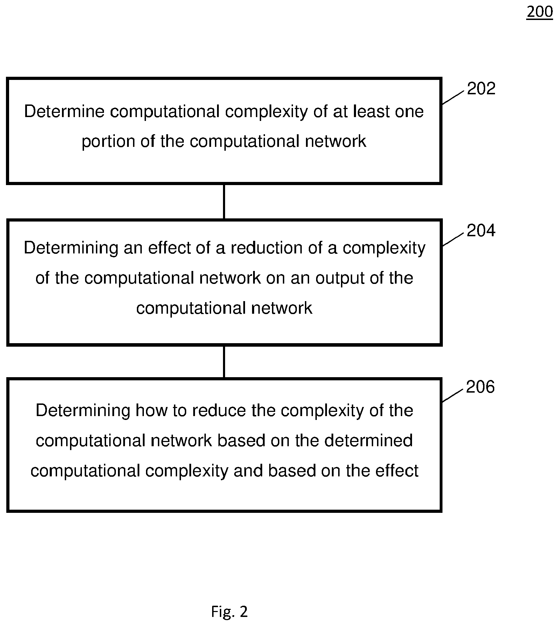

Fig. 2 shows a flow diagram 200 illustrating a method for reducing a complexity of a computational network according to various embodiments. At 202, a computational complexity of at least one portion of the computational network may be determined. At 204, an effect of a reduction of a complexity of the computational network on an output of the computational network may be determined. At 206, it may be determined how to reduce the complexity of the computational network based on the determined computational complexity and based on the effect.

According to various embodiments, determining the effect of a reduction of a complexity of the computation network may include or may be determining a channel importance metrics.

According to various embodiments, the channel importance metric type may be defined by user input.

According to various embodiments, determining the computational complexity may include or may be determining on-target profiling information.

According to various embodiments, the on-target profiling information may include or may be information on computational complexity on the system where the computational network is to be executed.

According to various embodiments, the system may include or may be at least one of a graphics processing unit, a central processing unit, a digital signal processor or an artificial intelligence accelerator.

According to various embodiments, determining how to reduce the complexity of the computational network based on the determined computational complexity and based on the effect may include or may be determining layers of the computational network to be subjected to pruning.

According to various embodiments, a computational network of reduced complexity may be determined based on the determination how to reduce the complexity.

According to various embodiments, determining the computational network of reduced complexity may include or may be pruning the computational network.

According to various embodiments, the computational network may include a plurality of layers.

According to various embodiments, the layers may include or may be at least one of convolution layers, dense layers, RNN layers or user-defined custom layers.

According to various embodiments, a graphical user interface may be provided for illustration of a computational network provided as input and a computational network for which the complexity has been reduced.

Each of the steps 202, 204, 206 and the further steps described above may be performed by computer hardware components.

### Reference numeral list

- 100: illustration of a method to reduce complexity of a computational network according to various embodiments
- 102: original model
- 104: test data
- 106: user-defined configuration
- 108: on-target model profiling
- 110: profiling information
- 112: channel importance metric evaluation
- 114: channel important metric files
- 116: target-aware channel pruning
- 118: final pruning configuration
- 120: generation and training
- 122: pruned model
- 124: visualization tool
- 126: graphical representation

- 200: flow diagram illustrating a method for reducing a complexity of a computational network according to various embodiments
- 202: step of determining computational complexity of at least one portion of the computational network
- 204: step of determining an effect of a reduction of a complexity of the computational network on an output of the computational network
- 206: step of determining how to reduce the complexity of the computational network based on the determined computational complexity and based on the effect.

## Claims

1. Computer implemented method for reducing a complexity of a computational network,
the method comprising the following steps carried out by computer hardware components:
- determining computational complexity of at least one portion of the computational network;
- determining an effect of a reduction of a complexity of the computational network on an output of the computational network; and
- determining how to reduce the complexity of the computational network based on the determined computational complexity and based on the effect.

2. The computer implemented method of claim 1,
wherein determining the effect of a reduction of a complexity of the computation network comprises determining a channel importance metrics.

3. The computer implemented method of claim 2,
wherein the channel importance metrics is defined by user input.

4. The computer implemented method of at least one of claims 1 to 3,
wherein determining the computational complexity comprises determining on-target profiling information.

5. The computer implemented method of claim 4,
wherein the on-target profiling information comprises information on computational complexity on the system where the computational network is to be executed.

6. The computer implemented method of claim 5,
wherein the system comprises at least one of a graphics processing unit, a central processing unit, a digital signal processor, a field programmable gate array (FPGA), an application specific integrated circuit (ASIC), or an artificial intelligence accelerator.

7. The computer implemented method of at least one of claims 1 to 6,
wherein determining how to reduce the complexity of the computational network based on the determined computational complexity and based on the effect comprises determining layers of the computational network to be subjected to pruning.

8. The computer implemented method of at least one of claims 1 to 7, further comprising the following step carried out by the computer hardware components:
determining a computational network of reduced complexity based on the determination how to reduce the complexity.

9. The computer implemented method of claim 8,
wherein determining the computational network of reduced complexity comprises pruning the computational network.

10. The computer implemented method of at least one of claims 1 to 9,
wherein the computational network comprises a plurality of layers.

11. The computer implemented method of claim 10,
wherein the layers comprise at least one of convolution layers, dense layers or user-defined custom layers.

12. The computer implemented method of at least one of claims 1 to 11, further comprising the following step carried out by the computer hardware components:
providing a graphical user interface for illustration of a computational network provided as input and a computational network for which the complexity has been reduced.

13. Computer system, the computer system comprising a plurality of computer hardware components configured to carry out steps of the computer implemented method of at least one of claims 1 to 12.

14. Computer system, the computer system comprising a plurality of computer hardware components configured to evaluate a computational network of reduced complexity, determined based on the method of at least one of claims 1 to 12.

15. Non-transitory computer readable medium comprising instructions for carrying out the computer implemented method of at least one of claims 1 to 12.
